## Europäisches Patentamt

## European Patent Office

## Office européen des brevets

(11) Numéro de publication: **0 275 738 B1**

(12) **FASCICULE DE BREVET EUROPEEN**

(45) Date de publication du fascicule du brevet:
09.05.90

(51) Int. Cl.⁵: **B60N 2/10**

(21) Numéro de dépôt: **87402810.3**

(22) Date de dépôt: **11.12.87**

(54) **Siège escamotable pour véhicule automobile.**

(30) Priorité: **12.12.86 FR 8617613**

(43) Date de publication de la demande:
**27.07.88 Bulletin 88/30**

(45) Mention de la délivrance du brevet:
**09.05.90 Bulletin 90/19**

(84) Etats contractants désignés:
**DE ES GB IT**

(56) Documents cités:
**GB-A- 2 051 569**
**US-A- 1 592 593**
**US-A- 1 613 893**
**US-A- 2 272 536**
**US-A- 3 095 232**
**US-A- 4 372 607**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Papon, Jean André, 7ter rue Paul Fort, F-91310 Montlhery(FR)**

(74) Mandataire: **Boivin, Claude, 9, rue Edouard-Charton, F-78000 Versailles(FR)**

ACTORUM AG

## Description

Pour faciliter l'accès aux places arrière d'un véhicule automobile, il est connu de faire basculer vers l'avant le siège du passager. Certains de ces sièges comportent un dossier repliable sur l'assise, celle-ci pouvant être basculée après repliement du dossier; mais ces sièges sont compliqués et onéreux car ils nécessitent des dispositifs de verrouillage permettant d'immobiliser le dossier et l'assise dans leurs deux positions d'utilisation. Dans d'autres sièges, le dossier et l'assise basculent solidairement; mais, dans les sièges de ce genre actuellement réalisés, le basculement ne peut avoir qu'une amplitude limitée et peut même être impossible si le dossier est muni d'un appui-tête. Dans tous les cas, la manœuvre est peu rapide et l'espace libérable est réduit.

Le document US-A-1 613 893 qui correspond au préambule de la revendication décrit un siège escamotable pour véhicule automobile dont l'assise est reliée au plancher du véhicule par un vilebrequin qui est articulé d'une part sur le plancher du véhicule et d'autre part sur l'assise, les deux axes de pivotement étant parallèles l'un à l'autre. Mais l'espace libérable est limité.

La présente invention a pour objet un siège escamotable pour véhicule automobile, dans lequel le dossier et l'assise peuvent être basculés vers l'avant solidairement et qui remédie à ces inconvénients, le dossier pouvant sans inconvénients être muni d'un appui-tête.

Dans le siège selon l'invention, les deux axes de pivotement font un angle différent de 90° avec l'axe longitudinal du véhicule, de sorte que le basculement du siège vers l'avant s'accompagne d'un déplacement du siège vers la paroi latérale du véhicule.

Dans ces conditions le basculement du siège vers l'avant entraîne une augmentation de l'espace disponible, ce qui permet de se contenter d'un angle de basculement limité, et un déplacement du siège vers la paroi latérale du véhicule, ce qui évite que la console centrale du véhicule ne gêne le basculement du siège.

Dans un mode de réalisation particulier de l'invention, l'assise du siège est en outre reliée au plancher du véhicule par au moins une biellette de guidage dont les deux axes de pivotement sont parallèles à ceux du vilebrequin.

On a décrit ci-après, à titre d'exemple non limitatif, un mode de réalisation du siège selon l'invention avec référence aux dessins annexés dans lesquels:

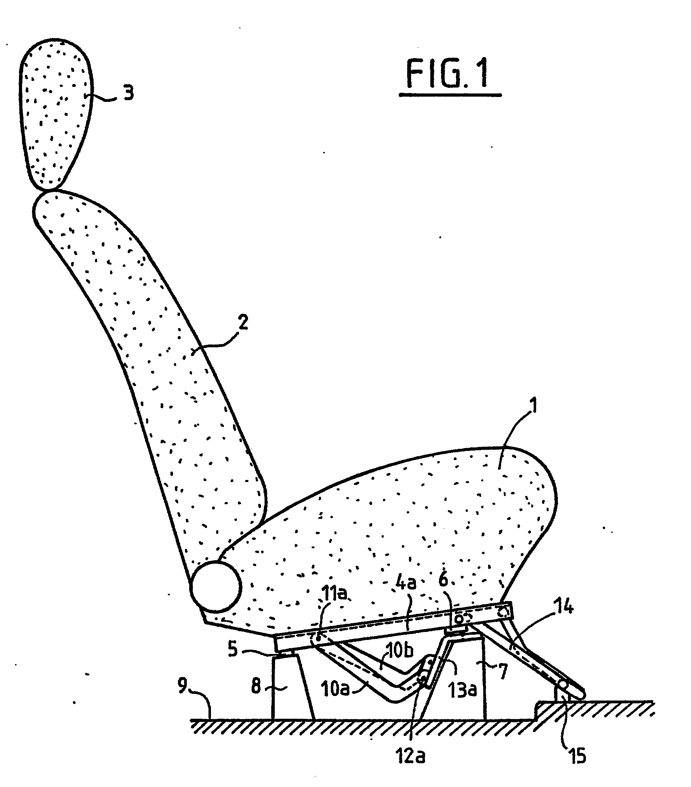

La Figure 1 est une vue en élévation du siège dans sa position d'utilisation normale;

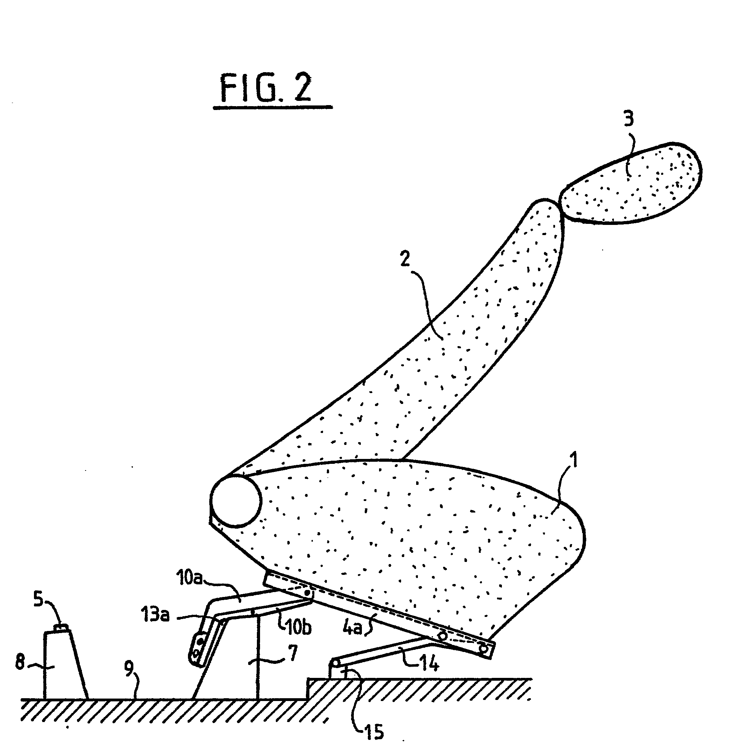

La Figure 2 est une vue semblable à la Figure 1, le siège etant basculé vers l'avant;

Les Figures 3 et 4 sont des vues en plan montrant les positions des supports du siège, celui-ci étant respectivement en position d'utilisation normale et en position basculée.

Tel qu'il est représenté au dessin, le siège selon l'invention comporte une assise 1, un dossier 2 et un appui-tête 3. L'assise 1 est fixée sur deux éléments de support 4$^a$ et 4$\underline{b}$ dont chacun prend appui en position d'utilisation par l'intermédiaire de butées en caoutchouc 5 et 6, sur la traverse avant sous siège 7 et sur un pontet arrière 8 soudés sur le plancher 9.

Chacun des éléments de support 4$^a$ et 4$\underline{b}$ est relié au plancher 9 par une biellette 10$^a$ ou 10$\underline{b}$ qui est articulée autour d'un axe 11$^a$ ou 11$\underline{b}$ sur l'élément de support et autour d'un axe 12$^a$ ou 12$\underline{b}$ sur un support de biellette fixé à la traverse avant 7, l'un de ces supports étant visible en 13$^a$; les axes comportent un jeu latéral suffisamment important pour éviter tout coincement.

Les deux éléments de support 4$^a$ et 4$\underline{b}$ sont en outre reliés au plancher 11 par un vilebrequin 14 dont les extrémités 14$^a$ et 14$\underline{b}$ situées dans le prolongement l'une de l'autre sont articulées dans les éléments de support alors que sa partie centrale 14$\underline{c}$ est montée pivotante dans un palier en tôle 15 fixé au plancher 9 par des vis 16.

Les axes des portions d'extrémité 14$^a$ et 14$\underline{b}$ du vilebrequin, celui de sa portion centrale 14$\underline{c}$, et les axes 11$^a$, 11$\underline{b}$, 12$^a$ et 12$\underline{b}$ sont tous parallèles à une même direction qui fait environ 80° avec l'axe longitudinal X-X du véhicule.

Pour libérer l'accès aux places arrière, on fait pivoter le siège par rapport au vilebrequin 14, autour de l'axe des portions d'extrémité 14$^a$ et 14$\underline{b}$ de celui-ci, en même temps qu'on fait basculer ce vilebrequin par rapport au plancher autour de l'axe de la portion 14$\underline{c}$.

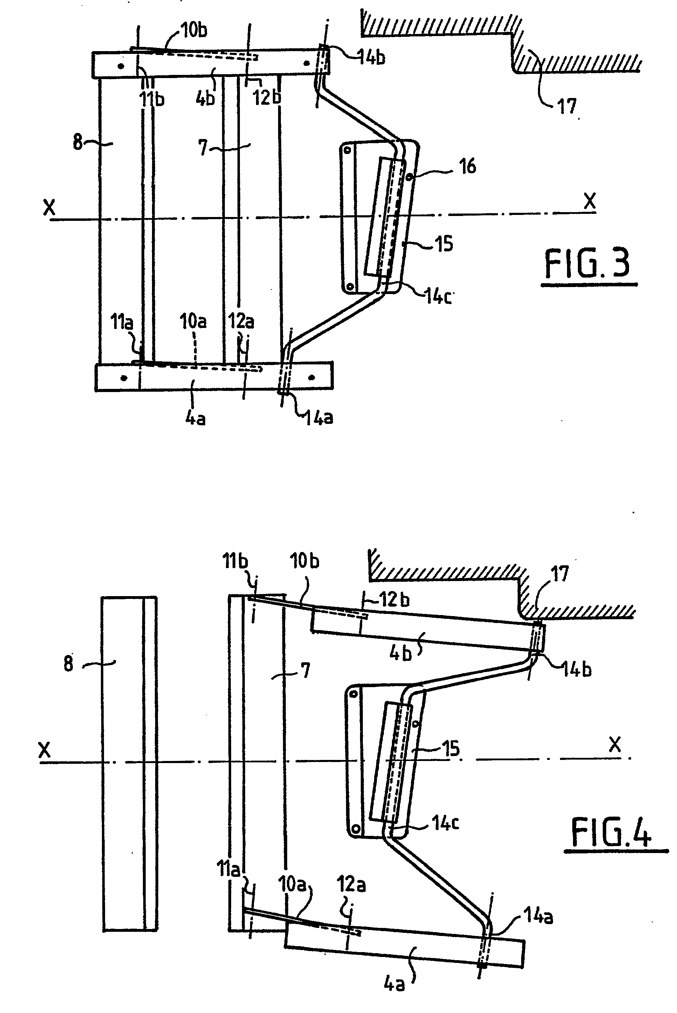

Le siège est ainsi déplacé vers l'avant, en passant par dessus la traverse avant 7, et, du fait de l'inclinaison des axes des divers pivots par rapport à l'axe transversal du véhicule, également vers la paroi latérale de ce véhicule comme le montre la Figure 4; les saillies telles que 17 de la console centrale qui peuvent être par exemple une tablette, un vide-poche ou un poste radio, ne gênent ainsi pas le basculement du siège.

## Revendications

1. Siège escamotable pour véhicule automobile, dans lequel le dossier et l'assise peuvent être basculés vers l'avant solidairement, dont l'assise est reliée au plancher (9) du véhicule par un vilebrequin (14) qui est articulé d'une part sur le plancher du véhicule et d'autre part sur l'assise, les deux axes de pivotement parallèles l'un à l'autre, caractérisé en ce que les deux axes de pivotement du vilebrequin font un angle différent de 90° avec l'axe longitudinal du véhicule de sorte que le basculement du siège vers l'avant s'accompagne d'un déplacement du siège vers la paroi latérale du véhicule.

2. Siège escamotable selon la revendication 1, caractérisé en ce que son assise (1) est en outre reliée au plancher (9) du véhicule par au moins une biellette de guidage (10$\underline{a}$ ou 10$\underline{b}$) dont les deux axes de pivotement (11$\underline{a}$–12$\underline{a}$ ou 11$\underline{b}$–12$\underline{b}$) sont parallèles à ceux du vilebrequin (14).

3. Siège escamotable selon la revendication 2, caractéerisé en ce que les paliers de la biellette de guidage (10$\underline{a}$ ou 10$\underline{b}$) comportent un jeu transversal.

## Patentansprüche

1. Einklappbarer Kraftfahrzeugsitz, bei dem die Rückenlehne und die Sitzplatte gemeinsam nach vorne gekippt werden können und dessen Sitzplatte (1) mit dem Boden (9) des Fahrzeugs über eine Kurbelwelle (14) verbunden ist, welche einerseits am Boden des Fahrzeugs und andererseits an der Sitzplatte angelenkt ist, wobei die beiden Schwenkachsen parallel zueinander verlaufen, dadurch gekennzeichnet, daß die beiden Schwenkachsen der Kurbelwelle (14) einen von 90° verschiedenen Winkel mit der Längsachse des Fahrzeugs einschließen derart, daß das Kippen des Sitzes nach vorne mit einer Verschiebung des Sitzes zur Seitenwand des Fahrzeugs hin verbunden ist.

2. Einklappbarer Sitz nach Anspruch 1, dadurch gekennzeichnet, daß seine Sitzplatte (1) außerdem über mindestens einen Führungsschwenkarm (10a oder 10b) mit dem Boden des Fahrzeugs verbunden ist, dessen beide Schwenkachsen (11a-12a oder 11b-12b) parallel zu den Schwenkachsen der Kurbelwelle (14) verlaufen.

3. Einklappbarer Sitz nach Anspruch 2, dadurch gekennzeichnet, daß die Lager des Schwenkarms (10a oder 10b) ein Querspiel aufweisen.

## Claims

1. Retractable seat for motor vehicle, in which the seat-back and the sitting portion may be tipped forwards together, with the sitting portion (1) connected to the floor (9) of the vehicle by a crankshaft (14) which is articulated both to the floor of the vehicle and to the sitting portion, the two pivoting axes being parallel to each other, characterized in that the two pivoting axes of the crankshaft form an angle different from 90° with the longitudinal axis of the vehicle so that tipping of the seat forwards is accompanied by a movement of the seat towards the side wall of the vehicle.

2. Retractable seat according to claim 1, characterized in that its sitting portion (1) is further connected to the floor (9) of the vehicle by at least one guide link (10a or 10b) whose two pivoting shafts (11a, 12a or 11b, 12b) are parallel to those of the crankshaft (14).

3. Retractable seat according to claim 2, characterized in that the bearings of the guide link (10a or 10b) comprise a transverse play.

<u>FIG.1</u>

# FIG. 2

EP 0 275 738 B1

FIG.3

FIG.4